Europäisches Patentamt

**European Patent Office**

**Office européen des brevets**

(19)

(11) Veröffentlichungsnummer: **0 048 772**

**B2**

(12) **NEUE EUROPÄISCHE PATENTSCHRIFT**

(45) Veröffentlichungstag der neuen Patentschrift:
02.08.89

(51) Int. Cl.⁴: **B 23 K 3/04**

(21) Anmeldenummer: **80105924.7**

(22) Anmeldetag: **30.09.80**

(54) **Heissluftgerät zum Entlöten, Löten, Schrumpfen u.dgl.**

(43) Veröffentlichungstag der Anmeldung:
07.04.82 Patentblatt 82/14

(45) Bekanntmachung des Hinweises auf die Patenterteilung:
15.08.84 Patentblatt 84/33

(45) Bekanntmachung des Hinweises auf die Entscheidung
über den Einspruch:
02.08.89 Patentblatt 89/31

(84) Benannte Vertragsstaaten:
**DE FR GB IT NL**

(56) Entgegenhaltungen:
**AT-B-298 047
DE-A-2 635 475
DE-A-2 847 482
DE-B-2 619 101**

**Die Akte enthält technische Angaben, die nach
dem Eingang der Anmeldung eingereicht wurden
und die nicht in dieser Patentschrift enthalten sind.**

(73) Patentinhaber: **Cooper Industries Inc., P.O. Box
4446, Houston Texas 77210 (US)**

(72) Erfinder: **Rittmann, Günther, Eberhardstrasse 8,
D-7121 Löchgau (DE)**
Erfinder: **Munz, Volker, Besigheimer Strasse 65,
D-7125 Kirchheim (DE)**

(74) Vertreter: **Wallach, Curt, Dipl.- Ing., Patentanwalte
Dipl.- Ing. Curt Wallach Dipl.- Ing. Gunther
Koch, Dipl.- Phys. Dr. Tino Haibach, Dipl.- Ing.
R. Feldkamp Postfach 920, D-8000 München 33
(DE)**

EP 0 048 772 B2

## Beschreibung

Die Erfindung bezieht sich auf ein Heißluftgerät zum Entlöten, Löten, Schrumpfen und dergleichen, mit einem Luftpumpenaggregat mit einer zum Aufheizen der von dem Luftpumpenaggregat gelieferten Luft dienenden Heizeinrichtung, die ein langgestrecktes Rohr umfaßt, dessen eines Ende im Bereich eines Handgriffes mit einem Ende eines biegsamen Luftschlauches verbunden ist, dessen anderes Ende mit dem Luftpumpenaggregat verbunden ist, wobei im Inneren des Rohres eine langgestreckte Heizwendel angeordnet ist, mit einer Heißluftdüse, die einen kleineren Querschnitt als das Rohr aufweist mit einer Regelschaltung zur Regelung der Temperatur der Heißluft und mit einer steuerbaren Heizstromversorgung, die eine Spannungsquelle und ein in seiner Leitfähigkeit steuerbares Halbleiterelement in Serie mit der Heizwendel aufweist.

Es ist bereits ein Heißluftgerät zum Entlöten bekannt (DE-A1-2 635 475), bei dem das Mundstück von einer Heizeinrichtung umgeben ist, die die durch das Mundstück stromende Luft auf eine Temperatur erwärmt, die zum Schmelzen des Lötmittels zur Vorbereitung des Entlötens ausreicht. Diese Temperatur hängt jedoch sehr stark von der durch das Mundstück stromenden Luftmenge sowie deren Eintrittstemperatur ab, so daß die Gefahr besteht, daß empfindliche Bauelemente durch eine übermäßig hohe Temperatur beim Auslöten beschädigt werden.

Es ist weiterhin ein Heißluft-Schweißgerät für thermoplastische Kunststoffe bekannt (AT-B-298 047), bei dem ein Temperaturfühler im Bereich des Luttaustrittsendes einer Heizwendel angeordnet ist. Dieser Temperaturfühler ist zur Steuerung einer Regelschaltung bestimmt und ermöglicht es weiterhin, eine Überhitzung des Gerätes bei Ausfall des Luftstromes zu verhindern. Dieses bekannte Heißluftgerät weist jedoch relativ große Abmessungen auf, die bedingt durch die Verwendung des Temperaturfühlers nicht beliebig verringert werden können.

Schließlich ist ein schnellaufheizender Lötkolben bekannt (DE-A1-2 847 482), bei dem das Heizelement durch einen Schichtwiderstand gebildet ist, der einen relativ hohen Temperaturkoeffizienten des elektrischen Widerstandes von mehr als $3,85 \times 10^{-3}$ 1/K aufweist, so daß die bei einer Aufheizung des Heizelementes auftretende Widerstandsänderung ausreichend groß ist, um eine direkte Temperaturmessung des Heizelementes auf der Grundlage der Widerstandsänderungen zu ermöglichen. Daher ist hierbei kein getrennter Temperaturfühler für eine elektronische Regelschaltung erforderlich. Ein derartiger Schichtwiderstand weist jedoch aufgrund seiner Masse eine erhebliche Wärmeträgheit auf, die im Vergleich zur Wärmekapazität von Luft zu groß ist, um eine Regelung der Temperatur der Heißluft in einem Heißluftgerät zu ermöglichen. Weiterhin ist ein stark erhöhter Temperaturkoeffizient des elektrischen Widerstandes bei Heißluftgeräten unerwünscht, da im erwärmten Zustand des Heizelementes und bei einer vorgegebenen Speisespannung die maximal mögliche Leistungszufuhr begrenzt ist.

Der Erfindung liegt die Aufgabe zugrunde, ein Heißluftgerät der eingangs genannten Art zu schaffen, das sehr kleine Abmessungen aufweist und bei dem die Austrittstemperatur der Heißluft sehr genau steuerbar ist.

Diese Aufgabe wird durch die im kennzeichnenden Teil des Anspruchs 1 angegebenen Merkmale gelöst.

Vorteilhafte Ausgestaltungen und Weiterbildungen der Erfindung ergeben sich aus den Unteransprüchen.

Dadurch, daß der Widerstand der Heizwendel als Meßkriterium für die Temperatur der aus der Heißluftdüse austretenden Heißluft herangezogen wird, ist es nicht erforderlich, einen getrennten Temperaturmeßfühler einzusetzen, so daß die Abmessungen des Heißluftgerätes sehr klein gehalten werden können und das Heißluftgerät für sehr feine Arbeiten geeignet ist. Die Regelgenauigkeit der Regelschaltung mit der Heizwendel selbst als Temperaturfühler ist wesentlich höher als bei Verwendung eines getrennten Temperaturfühlers und es ergibt sich eine wesentlich vergrößerte Ansprechgeschwindigkeit der Regelschaltung. Weiterhin besteht bei einem Ausfall der Luftversorgung von dem Luftpumpenaggregat keine Gefahr einer Überhitzung oder eines Durchbrennens der Heizwendel, da die Temperatur dieser Heizwendel über ihre gesamte Länge gemessen wird und nicht nur am Austrittsende des Luftstromes. Durch die Einhaltung einer sehr genauen Austrittstemperatur des Heißluftstromes aus der Heißluftdüse sowie aufgrund der geringen Abmessungen des Heißluftgerätes ist es möglich, dieses zum Entlöten und Löten von sehr empfindlichen elektronischen Bauteilen mit sehr geringen Abmessungen zu verwenden.

Zu diesem Zweck kann an dem Handgriff des Heißluftgerätes vorzugsweise ein Halter für eine Klemmpinzette angeordnet sein, deren Spitze sich in den Bereich des Austrittsendes der Heißluftdüse erstreckt. Mit dieser Klemmpinzette lassen sich sehr kleine empfindliche elektronische Bauteile erfassen, um diese zu löten oder aus einer Schaltung auszulöten.

Gemäß einer bevorzugten Ausgestaltung der Erfindung ist das in seine Leitfähigkeit steuerbares Halbleiterelement als Thyristor ausgebildet. Dabei wird vorzugsweise eine Steuerschaltung in Form einer Phasenanschnittssteuerung verwendet, und der Meßstrom wird im Bereich des Spannungsnulldurchgangs durch die Heizwendel geleitet und der hierbei erzeugte Spannungsabfall wird einer Vergleicherschaltung zugeführt.

Die Erfindung wird im folgenden anhand von in der Zeichnung dargestellten Ausführungsbeispielen noch näher erläutert.

In der Zeichnung zeigen:

Figur 1a eine teilweise geschnittene Ansicht des Handgriffes und des Rohres einer Ausführungsform der Heizeinrichtung des Heißluftgerätes,

Figur 1b eine geschnittene Draufsicht im Bereich Z nach Fig. 1a

Figur 1c eine gegenüber der Ansicht nach Fig. 1b um 90° gedrehte Ansicht des Querschnittes der Heizeinrichtung,

Figur 2 eine teilweise geschnittene Ansicht einer Ausführungsform des Heißluftgerätes mit einer daran gehaltenen Klemmeinrichtung,

Figur 3 ein Blockschaltbild einer Ausführungsform des elektrischen Regelkreises des Heißluftgerätes.

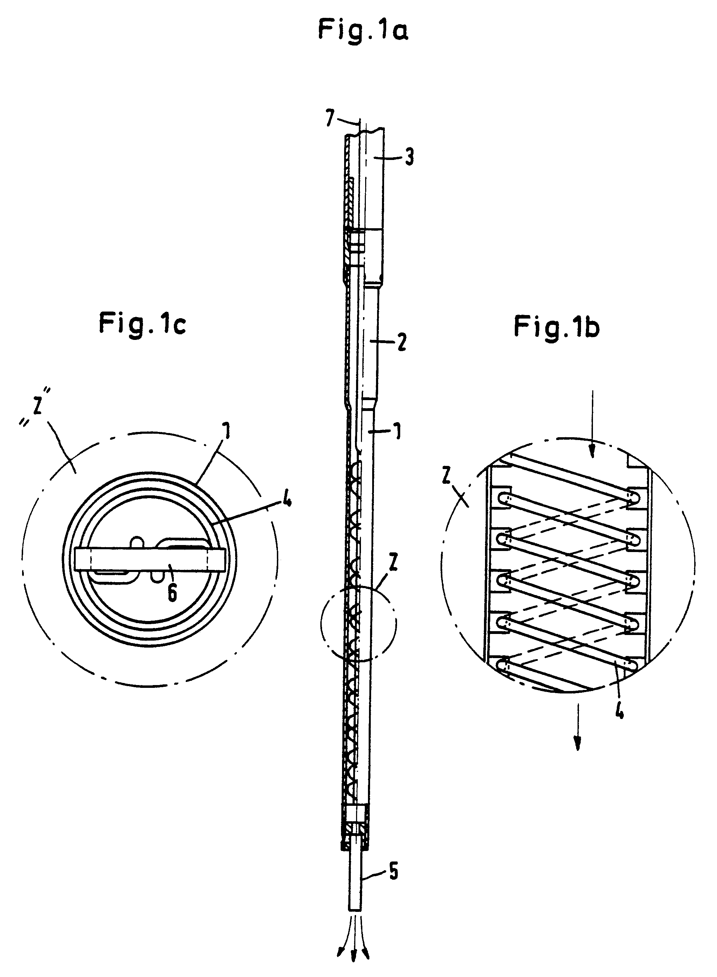

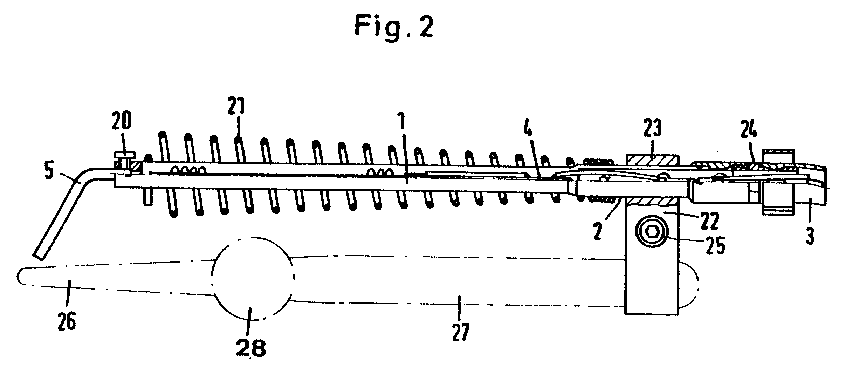

In Fig. 1 ist eine teilweise geschnittene Ansicht des Handgriffes und der Heizeinrichtung des Heißluftgerätes gezeigt. Der Handgriff 2 ist über einen biegsamen Luftschlauch 3 mit einem nicht gezeigten Luftpumpenaggregat üblicher Art verbunden, dessen Förderleistung einstellbar ist und so weit wie möglich konstant gehalten wird. Am anderen Ende des Handgriffes 2 ist ein langgestrecktes Rohr 1 der Heizeinrichtung befestigt, in dessen Innerem in der aus den Fig. 1b und 1c erkennbaren Weise eine Heizwendel 4 angeordnet ist, die lose auf einen kammförmigen Träger 6 aus temperaturbeständigem Material, wie z. B. aus Heizmikanit, gewickelt ist, der aus Fig. 1c zu erkennen ist. Am vorderen Ende trägt das Rohr 1 eine Heißluftdüse 5, deren Querschnitt kleiner ist als der Querschnitt des Rohres 1. Wie dies insbesondere auch aus Fig. 2 zu erkennen ist, erstreckt sich die Heizwendel nahezu über die gesamte Länge des Rohres, so daß die Aufheizung der von dem Luftpumpenaggregat zugeführten Luft kontinuierlich und weitgehend unabhängig von der Förderleistung des Luftpumpenaggregates erfolgt.

Das Heißluftgerät nach den Fig. 1 und 2 kann mit sehr geringen Abmessungen ausgebildet werden und weist ein sehr geringes Gewicht auf, so daß eine sehr genaue Handhabung möglich ist. Damit ist dieses Heißluftgerät beispielsweise zum Entlöten und Löten von sehr kleinen Bauteilen geeignet und Fig. 2 zeigt eine bevorzugte Ausgestaltung zur Behandlung sehr kleiner Bauteile. An dem Handgriff 2 ist eine aus zwei Hälften 22, 23 bestehende Halterung befestigt, die eine Klemmpinzette 27 trägt, die mit Hilfe der Befestigungsschraube 25 for die beiden Hälften 22, 23 der Halterung eingeklemmt werden kann. Das freie Ende 26 dieser Klemmpinzette ist im Bereich des Austrittsendes der Heißluftdüse 5 angeordnet und weist einen Klemmkörper 28 auf, mit dessen Hilfe ein von dem freien Ende 26 der Pinzette aufgenommenes Bauteil arretiert werden kann.

Wie dies weiterhin aus Fig. 2 zu erkennen ist, ist die Heißluftdüse 5 mit Hilfe einer Klemmschraube 20 im freien Ende des Rohres 1 der Heizeinrichtung befestigt. Das Rohr 1 ist weiterhin von einer Schutzfeder 21 in Form einer Schraubenfeder umgeben, deren Durchmesser zum freien Ende des Rohres hin ansteigt. Der Handgriff 2 weist an seinem von dem Rohr 1 abgewandten Ende eine Anschlußstelle 24 für den biegsamen Luftschlauch 3 auf, in dessen Innerem vorzugsweise die elektrischen Zuleitungen für die Heizeinrichtung geführt sind.

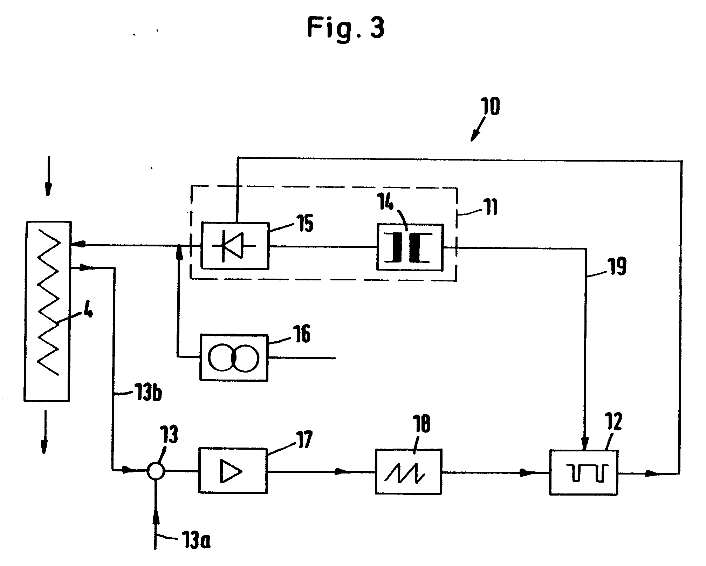

Die Heizwendel 4 weist einen relativ kleinen, vorzugsweise positiven Temperaturkoeffizienten auf, der jedoch vom Wert Null verschieden ist, damit diese Heizwendel gleichzeitig als Temperaturfühler für eine Regelschaltung verwendet werden kann, die im folgenden anhand der Fig. 3 noch näher erläutert wird.

Wie dies aus Fig. 3 zu erkennen ist, wird der Heizstrom für die Heizwendel 4 aus einer Spannungsversorgung 14 über ein in seiner Leitfähigkeit steuerbares Halbleiterelement 15, beispielsweise einen Thyristor oder Triac, geliefert.

Der Thyristor oder Triac 15 bildet zusammen mit der Spannungsversorgung 14 eine steuerbare Heizstromversorgung 11, die von einem Steuersignal einer Steuerschaltung 12 gesteuert wird, die beispielsweise eine bekannte Phasenanschnitt- oder Impulspaket-Steuerschaltung sein kann. Diese Steuerschaltung 12 ist über eine Leitung 19 mit der Netzfrequenz synchronisiert und schließt weiterhin einen Vergleicher 13 ein, der über einen Verstärker 17 und einen Sägezahngenerator 18 ein Steuersignal an die Steuerschaltung 12 liefert. Die Vergleicherschaltung 13 empfängt einerseits an einer Leitung 13a ein Sollwertsignal und andererseits an einer Leitung 13b ein Istwertsignal, das die Temperatur der Heizwendel 4 darstellt. Zur Erzeugung dieses Istwert-Signals wird die Heizwendel 4 im Bereich des Spannungsnulldurchganges des Ausgangssignals der Heizstromversorgung 11 mit einem Strom aus einer Meßstromquelle 16 gespeist und der dadurch längs der Heizwendel 4 erzeugte Spannungsabfall bildet das Istwert-Signal an der Leitung 13b. Das Ausgangssignal der Heizstromversorgung 11 ist ein impulsförmiges Signal, dessen einzelne Impulse sich nach einem Zündimpuls an das steuerbare Halbleiterelement 15 ergeben, wobei diese Zündimpuse kurz nach dem Spannungsnulldurchgang von der Steuerschaltung 12 erzeugt werden.

Der für die Heizwendel verwendete Heizdraht hat einen positiven Temperaturkoeffizienten von $3 \times 10^{-4}$ [1/K] und durch die Verwendung der Widerstandsänderungen der Heizwendel als Meßkriterium für die Regelschaltung 10 ergibt sich eine sehr genaue und praktisch trägheitslose Temperaturregelung der aus der Heißluftdüse 5 austretenden Heißluft. Weiterhin kann auf diese Weise ein zusätzlicher getrennter Temperaturfühler eingespart werden, so daß sich ein sehr einfacher kostengünstiger Aufbau ergibt.

**Patentansprüche**

1. Heißluftgerät zum Entlöten, Löten, Schrumpfen und dergleichen, mit einem Luftpumpenaggregat, mit einer zum Aufheizen der von dem Luftpumpenaggregat gelieferten Luft dienenden Heizeinrichtung, die ein langgestrecktes Rohr (1) umfaßt, dessen eines Ende im Bereich eines Handgriffs (2) mit einem Ende eines biegsamen Luftschlauches (3) verbunden ist, dessen anderes Ende mit dem Luftpumpenaggregat verbunden ist, wobei im Inneren des Rohres (1) eine langgestreckte Heizwendel (4) angeordnet ist, mit einer Heißluftdüse (5), die einen kleineren Querschnitt als das Rohr (1) aufweist, mit einer Regelschaltung (10) zur Regelung der Temperatur der Heißluft und mit einer steuerbaren Heizstromversorgung (11), die eine Spannungsquelle (14) und ein in sein Leitfähigkeit steuerbares Halbleiterelement (15) in Serie mit der Heizwendel (4) aufweist,

dadurch gekennzeichnet, daß der elektrische Widerstand der Heizwendel (4) als Meßkriterium für die Temperatur der aus der Heißluftdüse (5) austretenden Heißluft dient, und daß die Regelschaltung (10) eine die Heizstromversorgung (11) steuernde, den elektrischen Widerstand der Heizwendel (4) messende Steuerschaltung mit einer Meßstromquelle (16) umfaßt, deren Ausgangssignal bei Unterbrechung des Stromes aus der Heizstromversorgung (11) durch die Heizwendel geleitet wird, um den elektrischen Widerstand der Heizwendel (4) zu messen.

2. Hießluftgerät nach Anspruch 1, dadurch gekennzeichnet, daß die Heizwendel (4) lose auf einen kammförmigen Träger (6) aus temperaturbeständigem Material gewickelt ist.

3. Heißluftgerät nach Anspruch 2, dadurch gekennzeichnet, daß die Heizwendel (4) bifilar auf den kammförmigen Träger gewickelt ist.

4. Heißluftgerät nach einem der Ansprüche 1 bis 3, dadurch gekennzeichnet. daß die elektrische Zuleitung (7) zur Heizwendel (4) durch den Luftschlauch geführt ist.

5. Heißluftgerät nach einem der vorhergehenden Ansprüche, dadurch gekennzeichnet, daß die Heizwendel (4) aus einem Heizdraht mit positivem Widerstandstemperaturkoeffizienten gebildet ist.

6. Heißluftgerät nach Anspruch 5, dadurch gekennzeichnet, daß der Temperaturkoeffizient in der Größenordnung von $3 \times 10^{-4}$ [1/K] liegt.

7. Heißluftgerät nach einem der vorhergehenden Ansprüche, dadurch gekennzeichnet, daß die Steuerschaltung (12) eine Vergleicherschaltung (13) umfaßt, die als erstes Signal ein Sollwertsignal und als zweites Signal den durch das Ausgangssignal der Meßstromquelle (16) hervorgerufenen Spannungsabfall längs der Heizwendel (4) empfängt, und daß das Ausgangssignal der Vergleicherschaltung (13) als Steuersignal der steuerbaren Heizstromversorgung (11) zugeführt wird.

8. Heißluftgerät nach Anspruch, 7, dadurch gekennzeichnet, daß das in seiner Leitfähigkeit steuerbare Halbleiterelement (15) ein Thyristor ist und daß die Steuerschaltung (12) eine Phasenanschnittssteuerung ist, die von dem Ausgangssignal der Vergleicherschaltung (13) gesteuert ist.

9. Heißluftgerät nach Anspruch 8, dadurch gekennzeichnet, daß der Meßstrom im Bereich des Spannungsnulldurchgangs durch die Heizwendel (4) geleitet wird und daß der hierbei erzeugte Spannungsabfall der Vergleicherschaltung (13) zugeführt wird.

10. Heißluftgerät nach einem der vorhergehenden Ansprüche, dadurch gekennzechnet, daß das langgestreckte Rohr (1) von einer Schutzschraubenfeder (21) umgeben ist.

11. Heißluftgerät nach einem der vorhergehenden Ansprüche, dadurch gekennzechnet, daß an dem Handgriff (2) ein Halter (23, 24) für eine Pinzette (27) befestigt ist, deren Spitze sich in den Bereich des Austrittsendes der Heißluftdüse (5) erstreckt.

## Claims

1. Hot air appliance for desoldering, soldering, shrinking and similar operations, said appliance comprising an air pump unit and a heater which serves to heat the air delivered thereby, this heater comprising an elongate tube (1) inside which an elongate heating spiral (4) is installed, one end of this tube (1) being connected to one end of a flexible air hose (3) via a connection in the region of a handgrip (2) and the other end of the air hose (3) being connected to the air pump unit, said hot air appliance futher comprising a hot air nozzle (5) of smaller cross-section than the tube (1), a regulating circuit (10) for regulating the temperature of the hot air, and a controllable heating power supply stage (11) which possesses a voltage source (14) and a controllable-conductivity semiconductor element (15) in series with the heating spiral (4), characterized in that the electrical resistance of the heating spiral (4) serves as a measurement criterion for the temperature of the hot air which emerges from the hot air nozzle (5), and in that the regulating circuit (10) comprises a control circuit which possesses a measuring current source (16), which measures the electrical resistance of the heating spiral (4), and which controls the heating power supply stage (11), the output signal from the measuring current source (16) being led through the heating spiral at points in time when the current from the heating power supply stage (11) is interrupted, so as to measure the electrical resistance of the heating spiral (4).

2. Hot air appliance according to claim 1, characterized in that the heating spiral (4) is loosely wound onto a comb-shaped support (6) which is composed of heat-resistant material.

3. Hot air appliance according to claim 2, characterized in that the heating spiral (4) is double wound onto the comb-like support.

4. Hot air appliance according to any one of claims 1 to 3, characterized in that the electrical supply lead (7) to the heating spiral (4) is led through the air hose.

5. Hot air appliance according to any one of the preceding claims, characterized in that the heating spiral (4) is formed from a heating wire with a positive temperature coefficient of resistance.

6. Hot air appliance according to claim 5, characterized in that the temperature coefficient is of the order of magnitude of $3 \times 10^{-4}$ (1/K).

7. Hot air appliance according to any one of the preceding claims, characterized in that the control circuit (12) comprises a comparator circuit (13) which receives a required value signal as a first signal, and which receives the voltage drop along the heating spiral (4) as a second signal, this voltage drop resulting from the output signal from the measuring current source (16), and in that the output signal from the comparator circuit (13) is supplied to the controllable heating current supply stage (11) as a control signal.

8. Hot air appliance according to claim 7, characterized in that the controllable-conductivity semiconductor element (15) is a thyristor, and in that the control circuit (12) is of the phase-gating type and is controlled by the output signal from the comparator circuit (13).

9. Hot air appliance according to claim 8, characterized in that the measuring current is led through the heating spiral (4) at points in time approximating to those at which the voltage passes through zero, and in that the resulting voltage drop is supplied to the comparator circuit.

10. Hot air appliance according to any one of the preceding claims, characterized in that the elongate tube (1) is surrounded by a helical spring (21) which has a protective function.

11. Hot air appliance according to any one of the preceding claims, characterized in that a holder (23, 24) for tweezers (27) is fastened to the handgrip (2), the tips of the tweezers extending into the region of the outlet end of the hot air nozzle (5).

**Revendications**

1. Appareil à air chaud pour dessouder, souder, fretter et analogues, comprenant un groupe motopompe à air, un dispositif de chauffage servant à chauffer l'air fourni par le groupe motopompe à air et comportant un tube allongé (1) dont l'une des extrémités dans la zone d'une poignée (2) est reliée à une extrémité d'un tuyau à air flexible (3) dont l'autre extrémité est reliée au groupe motopompe à air, un enroulement de chauffage allongé (4) étant disposé à l'intérieur du tube (1), l'appareil comportant une tuyère à air chaud (5) de section plus faible que celle du tube (1), un circuit de régulation (10) pour la régulation de la température de l'air chaud ainsi qu'une alimentation commandable en courant de chauffage (11) comprenant, en série avec l'enroulement de chauffage (4), une source de tension (14) et un élément semi-conducteur (15) dont la conductibilité peut être commandée, caractérisé en ce que la résistance électrique de l'enroulement de chauffage (4) sert de paramètre de mesure de la température de l'air chaud sortant de la tuyère à air chaud (5), et que le circuit de régulation (10) comprend un circuit de commande avec une source de courant de mesure (16) qui commande l'alimentation en courant de chauffage (11) et mesure la résistance électrique de l'enroulement de chauffage (4) et dont le signal de sortie est envoyé, lors de l'interruption du courant venant de l'alimentation en courant de chauffage (11), dans l'enroulement de chauffage pour mesurer la résistance électrique de l'enroulement de chauffage (4).

2. Appareil à air chaud selon la revendication 1, caractérisé en ce que l'enroulement de chauffage (4) est enroulé avec jeu sur un support (6) en forme de peigne réalisé dans un matériau résistant à la température.

3. Appareil à air chaud selon la revendication 2, caractérisé en ce que l'enroulement de chauffage (4) est enroulé de façon bifilaire sur le support en forme de peigne.

4. Appareil à air chaud selon l'une quelconque des revendications 1 à 3, caractérisé en ce que l'alimentation électrique (7) de l'enroulement de chauffage (4) s'effectue à travers le tuyau à air.

5. Appareil à air chaud selon l'une quelconque des revendications précédentes, caractérisé en ce que l'enroulement de chauffage (4) est constitué d'un filament chauffant à coefficient de température positif.

6. Appareil à air chaud selon la revendication 5, caractérisé en ce que le coefficient de température est de l'ordre de $3 \times 10^{-4}$ [1/K].

7. Appareil à air chaud selon l'une quelconque des revendications précédentes, caractérisé en ce que le circuit de commande (12) comprend un circuit comparateur (13) qui reçoit comme premier signal un signal de valeur de consigne et comme second signal la chute de tension le long de l'enroulement de chauffage (4) provoquée par le signal de sortie de la source de courant de mesure (16), et que le signal de sortie du circuit comparateur (13) est amené comme signal de réglage à l'alimentation commandable en courant de chauffage (11).

8. Appareil à air chaud selon la revendication 7, caractérisé en ce que l'élément semi-conducteur (15), à pouvoir conducteur réglable, est un thyristor et que le circuit de commande (12) est une commande par coupe commandée par le signal de sortie du circuit comparateur (13).

9. Appareil à air chaud selon la revendication 8, caractérisé en ce que le courant de mesure dans la zone du passage par zéro de la tension est acheminé par l'enroulement de chauffage (4) et que la chute de tension ainsi produite est appliquée au circuit comparateur (13).

10. Appareil à air chaud selon l'une quelconque des revendications précédentes, caractérisé en ce que le tube allongé (1) est entouré par un ressort hélicoïdal de protection (21).

11. Appareil à air chaud selon l'une quelconque des revendications précédentes, caractérisé en ce que sur la poignée (2) est fixé un support (23, 24) pour une pince (27) dont la pointe s'étend dans la zone de l'extrémité de sortie de la tuyère à air chaud (5).

# Fig.1a

# Fig.1c

# Fig.1b

# Fig. 2

Fig. 3